# EUROPEAN PATENT SPECIFICATION

(11) **EP 3 027 089 B1**
(45) Date of publication and mention of the grant of the patent: **15.01.2020**
(21) Application number: 14777201.6
(22) Date of filing: 23.07.2014
(51) Int. Cl.: A47J 31/06, A47J 31/46, A47J 31/057

(54) **A HOT BEVERAGE PREPARATION MACHINE**
MASCHINE ZUR ZUBEREITUNG HEISSER GETRÄNKE
MACHINE DE PRÉPARATION DE BOISSONS CHAUDES

(30) Priority: 02.08.2013 TR 201309436
(43) Date of publication of application: 08.06.2016
(73) Proprietor: Arçelik Anonim Sirketi, 34445 Istanbul (TR)
(72) Inventor: GERZELI, Ismail, 34950 Istanbul (TR); HASANREISOGLU, Ali, Levent, 34950 Istanbul (TR)
(86) International application number: PCT/TR2014/000256
(87) International publication number: WO 2015/016792

(56) References cited:
- EP-A1- 1 692 953
- WO-A1-2011/003542
- CA-A1- 2 121 998
- US-A- 4 798 222
- US-A1- 2010 024 659
- US-B1- 6 170 387
- US-B1- 8 663 724

## Description

The present invention relates to a hot beverage preparation machine comprising a strainer disposed into the brewing chamber.

The brewing process is performed in the brewing chamber as a result of the interaction between the raw beverage material and water. The beverage that is filtered by the strainer situated in the brewing chamber is transferred into the pot. The user should take the strainer out of the brewing chamber for washing. When the user detaches the strainer, beverage leaks through the hole under the strainer. In the state of the art, valve systems are used, that prevent the beverage in the strainer from leaking in case the strainer is lifted off its place. When placed into the brewing chamber, the said valve systems enable the beverage to be transferred into the pot from the strainer. However, an efficient leak-proofing cannot be provided since these systems do not create enough space for the movement of the spring in the valve. Moreover, these systems pose difficulties in terms of production and assembly.

In the state of the art Canadian Patent Application No. CA2334422A1, a movable valve system is disclosed, that is situated in a coffee machine and that is sealedly mounted.

United States Patent US 6 170 387 B1 discloses an apparatus for the production of heated beverage comprising a brewing chamber the outlet of which is closed by the upper part of a valve for a period during operation to ensure retention of the liquid in contact with the coffee. If a certain temperature is reached in the brewing chamber, a thermo-metal spring pushes the upper part of the valve into an open position. The valve further comprises a lower part with an opening that is closed by a bulbous end if the brewing chamber is not on top of a beverage container. If it is on top of the container, the flexible bottom part of the valve is compressed, thus lifting the bulbous end out of the opening.

The aim of the present invention is the realization of a hot beverage preparation machine that provides ease of production and utilization. Said aim is achieved by a hot beverage preparation machine according to claim 1.

In the hot beverage preparation machine realized in order to attain the aim of the present invention and explicated in the claims, the brewing chamber is disposed on the body so as to be above the pot. The strainer is seated onto the brewing chamber. The strainer comprises an upper casing that remains in the strainer, that is mounted around the hole at the strainer's base and that partially closes the hole and a lower casing that extends from the strainer's base towards the outside of the strainer and that is situated opposite to the upper casing so that the hole is situated between the upper casing and the lower casing. The valve remains in the upper casing and the lower casing. The upper and the lower casings have predetermined heights. Thus, the valve remains in a position that creates the sufficient space for the transfer of liquid from the strainer when the strainer is seated into the brewing chamber, and moreover, the valve can be changed to a position that prevents the transfer of beverage from the strainer by means of the space where the valve can move easily and rapidly when the strainer is taken out of the brewing chamber.

In an embodiment of the present invention, the lower casing and/or upper casing is fixed to the strainer by being welded. The lower casing, that is preferably in form of a glass with a cut-out base, is seated onto the strainer's base so as to almost completely surround the vicinity of the hole and fixed to the strainer by being welded. The lower casing is fixed to the strainer so as not to leak beverage except for the additional hole arranged almost at the center of the base thereof. The upper casing is fixed into the strainer in the same manner by welding around the vicinity of the hole so as to partially cover the hole. The upper casing covers the hole partially in order to allow beverage transfer into the lower casing.

In an embodiment of the present invention, the upper casing is fixed to the strainer by spot welding so as to move together with the strainer as a single piece.

In an embodiment of the present invention, in the hot beverage preparation machine, the guide remains at least partially in the lower casing while the strainer is placed into the brewing chamber and by bearing against the sealing element, enables the spring to remain in the pressed position, thus enables the top side of the additional hole at the lower casing base to be open and the beverage to be transferred into the pot through the additional hole. The spring remaining between the lower casing and the upper casing can be efficiently compressed by means of the upper casing and the lower casing having predetermined heights or the spring can stretch so as to place the sealing element into the additional hole in a rapid manner.

In an embodiment of the present invention, the strainer has the lower casing that is fixed to the strainer's base by being welded so as to completely surround the hole, the spring that is placed into the lower casing and the upper casing that is fixed into the strainer by being welded so that the sealing element exerts pressure onto the spring and partially surrounds the hole. The lower casing is fixed to the strainer by being welded. Afterwards, the sealing element and the spring are placed therein.

In an embodiment of the present invention, the upper casing comprises a platform and at least two flanges that extend downwards from over the platform so that a distance remains therebetween, each being seated around the hole and fixed to this place by being welded.

In an embodiment of the present invention, the upper casing comprises two flanges that extend downwards from over the platform so as to face each other and two extensions that extend downwards from over the platform so as to face each other, that remain between the flanges and that are shorter than the flanges.

In an embodiment of the present invention, the strainer comprises a guide that has the sealing element at its end portion and an inner casing that is fixed to the wall of the hole and wherein the guide is placed so as to move upwards-downwards. The spring is placed into the inner casing so as to be opposite to the guide.

In an embodiment of the present invention, the hot beverage preparation machine comprises a plate-shaped sieve with openings thereon, that is mounted into the strainer so as to almost completely close the strainer base, that remains above the upper casing in the strainer and that enables the beverage in the strainer to be taken out of the strainer by being filtered. The upper casing supports the sieve from below and prevents the sieve from bending with the pressure exerted by the brew and the beverage.

By means of the present invention, a hot beverage preparation machine is realized, comprising a strainer that has an easy-to-produce and easy-to-assemble upper casing, that transfers the beverage therein into the pot when in the brewing chamber and that prevents the beverage from leaking through its base when taken out of the brewing chamber.

The hot beverage preparation machine realized in order to attain the aim of the present invention is illustrated in the attached figures, where:

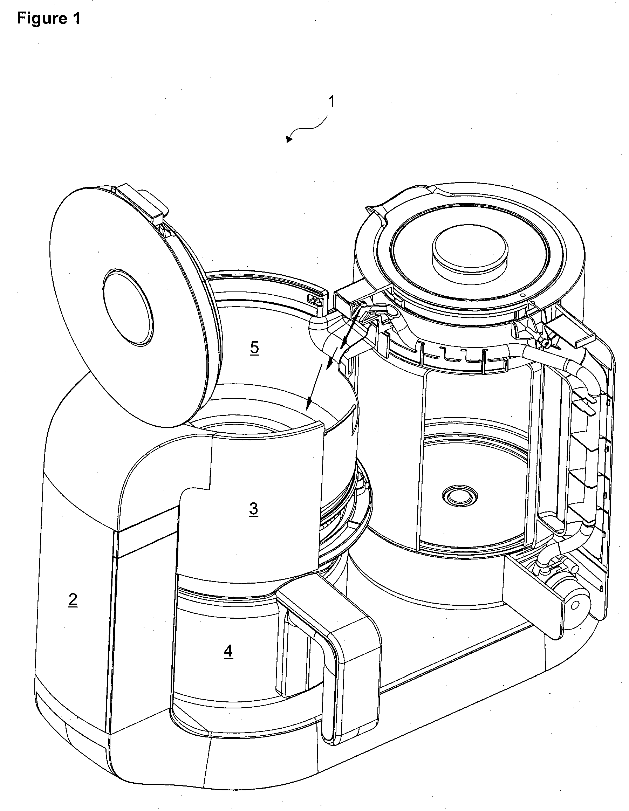

Figure 1 - is the perspective view of a hot beverage preparation machine.

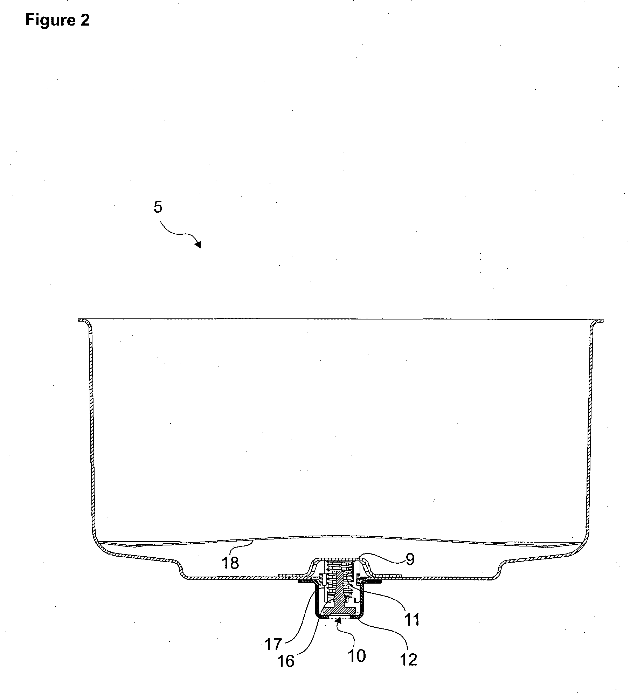

Figure 2 - is the partial cross-sectional view of the strainer in an embodiment of the present invention.

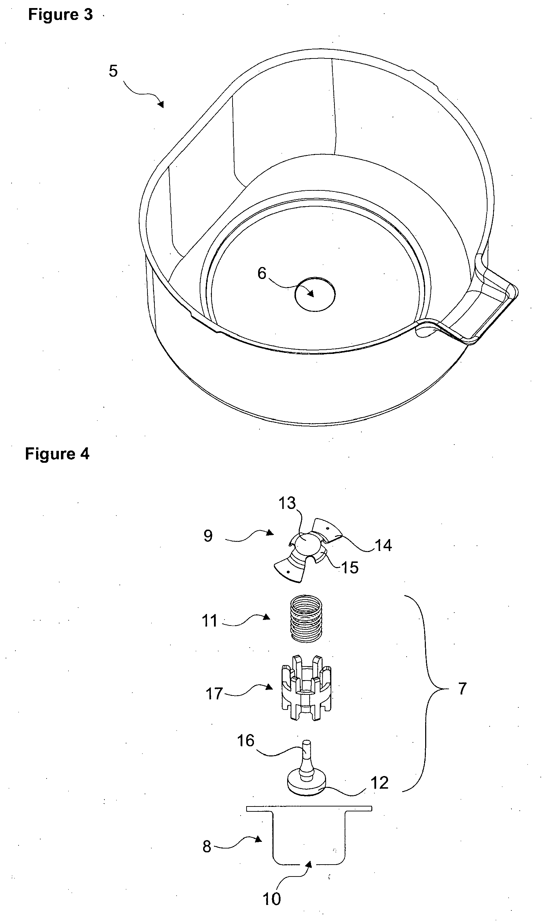

Figure 3 - is the perspective view of a strainer.
Figure 4 - is the perspective view of the lower casing, the additional hole, the spring, the sealing element, the guide and the upper casing in an embodiment of the present invention.
Figure 5 - is the perspective view of the upper casing while being placed into the strainer in an embodiment of the present invention.
Figure 6 - is the perspective view of the upper casing when it is in the strainer in an embodiment of the present invention.

The elements illustrated in the figures are numbered as follows:
1. Hot beverage preparation machine
2. Body
3. Brewing chamber
4. Pot
5. Strainer
6. Hole
7. Valve
8. Lower casing
9. Upper casing
10. Additional hole
11. Spring
12. Sealing element
13. Platform
14. Flange
15. Extension
16. Guide
17. Inner casing
18. Sieve

The hot beverage preparation machine (1) comprises:
- a body (2),
- a brewing chamber (3) wherein the brewing process is performed as a result of the interaction between water and the raw beverage material,
- a pot (4) that remains under the brewing chamber (3) when placed onto the body (2) and wherein the beverage pouring from the brewing chamber (3) is accumulated,
- a strainer (5) that is placed into the brewing chamber (3), wherein the raw beverage material is put and that enables the beverage to be transferred to the pot (4) by retaining the raw beverage material particles,
- a hole (6) arranged at the strainer's (5) base,
- a valve (7) that is placed onto the hole (6), that prevents the beverage in the strainer (5) from leaking outside when the strainer (5) is taken out of the brewing chamber (3) and that enables the beverage in the strainer (5) to leave the strainer (5) when the strainer (5) is placed into the brewing chamber (3).

The hot beverage preparation machine (1) of the present invention comprises:
- a lower casing (8) that is situated at the strainer's (5) base, that extends outwards from the strainer (5) and that partially closes the lower side of the hole (6),
- an upper casing (9) that is situated at the strainer's (5) base, that extends into the strainer (5) and that partially closes the upper side of the hole (6), and
- the valve (7) that is situated so as to move in the volume formed by the lower casing (8) and the upper casing (9),
(Figure 1, Figure 2, Figure 3, Figure 4, Figure 5).

In the hot beverage preparation machine (1) of the present invention, when hot beverage is desired to be prepared, water is filled into a water container and placed on a platform. The beverage preparation process is started by means of a button. The water in the water container is enabled to be heated by operating a water heater with the energy transferred from a connector. The heated water is transferred to a water container orifice by means of a transfer mechanism. The water poured from the water container orifice to the strainer (5) orifice is transferred into the strainer (5) by trickling over the strainer (5) orifice. The beverage accumulated in the strainer (5) is transferred outside the strainer (5) by being filtered. By means of the valve (7) situated at the strainer's (5) base between the lower casing (8) and the upper casing (9), beverage does not leak from the strainer's (5) base when the strainer (5) is taken out of the brewing chamber (3) while the beverage can be easily transferred outside of the strainer (5) when the strainer (5) is placed into the brewing chamber (3). The lower casing (8) and the upper casing (9) have enough heights to provide movement space for the valve (7). Thus, the strainer (5) is leak-proofed in an efficient manner or the beverage is effectively transferred from the strainer (5) into the brewing chamber (3).

In an embodiment of the present invention, the lower casing (8) and/or the upper casing (9) is fixed to the strainer (5) by being welded. The lower casing (8), that is preferably in form of a hollow cylinder, is seated onto the strainer (5) base so as to almost completely surround the vicinity of the hole (6) and fixed to the strainer (5) by being welded. The upper casing (9) is fixed into the strainer (5) in the same manner by being welded so as to partially cover the hole (6). The upper casing (9) covers the hole (6) partially in order to allow beverage transfer into the lower casing (8).

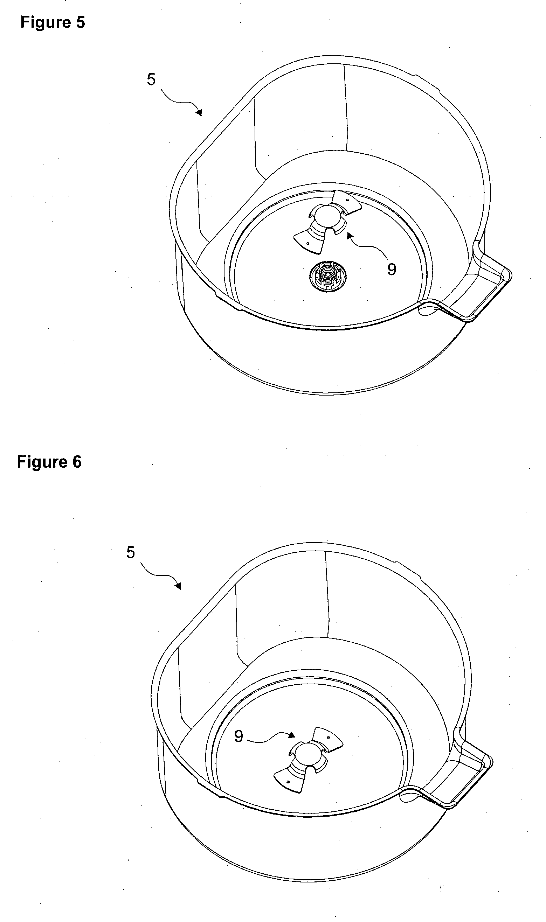

In an embodiment of the present invention, the upper casing (9) is fixed to the strainer (5) by spot welding (Figure 6).

In an embodiment of the present invention, the strainer (5) comprises an additional hole (10) that is arranged at the lower casing (8) base and that enables the beverage to be transferred outside from the strainer (5) and the valve (7) that has a spring (11) and a sealing element (12) that is placed into the lower casing (8), that closes the additional hole (10) by being pushed by the spring (11) when the strainer (5) is taken out of the brewing chamber (3), that prevents the beverage in the strainer (5) from leaking outside, that is driven when the strainer (5) is placed into the brewing chamber (3) and that enables the spring (11) to be compressed with the drive and also enables the beverage in the strainer (5) to be taken out of the strainer (5) through the additional hole (10).

When the user takes the strainer (5) out of the brewing chamber (3), the sealing element (12) closes the additional hole (10) with the effect of the compressive force of the spring (11) and prevents the beverage from leaking outside the strainer (5). When the user places the strainer (5) into the brewing chamber (3), by means of the driving element that contacts the sealing element (12), the spring (11) compresses and the beverage is enabled to be transferred into the brewing chamber (3) through the additional hole (10) by passing by the sealing element (12). The lower casing (8) and the upper casing (9) have enough heights to provide movement space for the spring (11). Thus, the strainer (5) is leak-proofed in an efficient manner or the beverage is effectively transferred from the strainer (5) into the brewing chamber (3).

While the strainer (5) is placed into the brewing chamber (3), the driving element is fitted into the additional hole (10) and compresses the spring (11) by contacting the sealing element (12). Due to the height of the upper casing (9), there is a certain distance between the strainer's (5) base and the upper casing (9) ceiling. Thus, the movement area of the spring (11) is increased. Since the spring (11) moves more effectively, the sealing element (12) closes the additional hole (10) in a rapid manner when the strainer (5) is taken out of the brewing chamber (3).

In an embodiment of the present invention, the strainer (5) has the lower casing (8) that is fixed to the strainer's (5) base by being welded so as to completely surround the hole (6), the spring (11) and the sealing element (12) that are placed into the lower casing (8), and the upper casing (9) that is fixed into the strainer (5) by being welded so as to exert pressure onto the spring (11) and partially surround the hole (6). The lower casing (8) is fixed to the strainer (5) by being welded. Afterwards, the sealing element (12) and the spring (11) are placed therein.

In an embodiment of the present invention, the upper casing (9) comprises a platform (13) and at least two flanges (14) that extend downwards from over the platform (13) so that a distance remains therebetween, each being seated around the hole (6) and fixed to this place by being welded.

In an embodiment of the present invention, the upper casing (9) comprises two flanges (14) that extend downwards from over the platform (13) so as to face each other and two extensions (15) that extend downwards from over the platform (13) so as to face each other, that remain between the flanges (14) and that are shorter than the flanges (14).

In an embodiment of the present invention, the flange (14) is L-shaped.

In an embodiment of the present invention, the strainer (5) comprises a guide (16) that has the sealing element (12) at its end portion and an inner casing (17) that is fixed to the wall of the hole (6) and wherein the guide (16) is placed so as to move upwards-downwards. The spring (11) is placed into the inner casing (17) so as to be opposite to the guide (16).

In an embodiment of the present invention, the hot beverage preparation machine (1) comprises a plate-shaped sieve (18) with openings thereon, that is mounted onto the strainer's (5) base so as to almost completely close the base, that remains above the upper casing (9) in the strainer (5) and that enables the beverage in the strainer (5) to be taken out of the strainer (5) by being filtered. The upper casing (9) supports the sieve (18) from below and prevents the sieve (18) from bending with the pressure exerted by the brew and the beverage.

By means of the present invention, a hot beverage preparation machine (1) is realized, comprising a strainer (5) that has an easy-to-produce and easy-to-assemble lower casing (8) and upper casing (9) and that provides an efficient leak-proofing, wherein the valve (7) situated between the lower casing (8) and the upper casing (9) gains an effective movement space.

## Claims

1. A hot beverage preparation machine (1) comprising
- a body(2),
- a brewing chamber (3) wherein the brewing process is performed as a result of the interaction between water and the raw beverage material,
- a pot (4) that remains under the brewing chamber (3) when placed onto the body (2) and wherein the beverage pouring from the brewing chamber (3) is accumulated,
- a strainer (5) that is placed into the brewing chamber (3), wherein the raw beverage material is put and that enables the beverage to be transferred to the pot (4) by retaining the raw beverage material particles,
- a hole (6) arranged at the strainer's (5) base,
- a valve (7) that is placed onto the hole (6), that prevents the beverage in the strainer(5) from leaking outside when the strainer (5) is taken out of the brewing chamber (3) and that enables the beverage in the strainer (5) to leave the strainer (5) when the strainer (5) is placed into the brewing chamber (3),
- a lower casing (8) that is situated at the strainer's (5) base, that extends outwards from the strainer (5) and that partially closes the lower side of the hole (6),
- an upper casing (9) that is situated at the strainer's (5) base, that extends into the strainer (5) and that partially closes the upper side of the hole (6), and
- the valve (7) that is situated so as to move in the volume formed by the lower casing (8) and the upper casing (9), wherein an additional hole (10) that is arranged at the lower casing (8) base and that enables the beverage to be transferred outside from the strainer (5) and the valve (7) that has a spring (11) and a sealing element (12)
- that is placed into the lower casing (8),
- that closes the additional hole (10) by being pushed by the spring (11) when the strainer (5) is taken out of the brewing chamber (3) and prevents the beverage in the strainer (5) from leaking outside,
- that is driven, when the strainer (5) is placed into the brewing chamber (3), by a driving element which is fitted into the additional hole (10) and compresses the spring (11) by contacting the sealing element (12),
- and that enables the beverage in the strainer (5) to be taken out of the strainer (5) through the additional hole (10).

2. A hot beverage preparation machine (1) as in Claim 1, **characterized by** the lower casing (8) and/or the upper casing (9) fixed to the strainer (5) by being welded.

3. A hot beverage preparation machine (1) as in Claim 2, **characterized by** the upper casing (9) that is fixed to the strainer (5) by spot welding.

4. A hot beverage preparation machine (1) as in any one of the above claims , **characterized by** the lower casing (8) that is fixed to the strainer's (5) base by being welded so as to completely surround the hole (6), the spring (11) and the sealing element (12) that are placed into the lower casing (8), and the upper casing (9) that is fixed into the strainer (5) by being welded so as to exert pressure onto the spring (11) and partially surround the hole (6).

5. A hot beverage preparation machine (1) as in any one of the above claims, **characterized by** the upper casing (9) having a platform (13) and at least two flanges (14) that extend downwards from over the platform (13) so that a distance remains therebetween, each being seated around the hole (6) and fixed to this place by being welded.

6. A hot beverage preparation machine (1) as in Claim 5, **characterized by** two extensions (15) that extend downwards from over the platform (13) so as to face each other, that remain between the flanges (14) and that are shorter than the flanges (14).

7. A hot beverage preparation machine (1) as in Claim 5 or 6, **characterized by** the L-shaped flange (14).

8. A hot beverage preparation machine (1) as in any one of the above claims, **characterized by** a guide (16) that has the sealing element (12) at its end portion, an inner casing (17) that is fixed to the wall of the hole (6) and wherein the guide (16) is placed so as to move upwards-downwards, and the spring (11) that is placed into the inner casing (17) so as to be opposite to the guide (16).

9. A hot beverage preparation machine (1) as in any one of the above claims, **characterized by** a plate-shaped sieve (18) with openings thereon, that is mounted onto the strainer's (5) base so as to almost completely close the base, that remains above the upper casing (9) in the strainer (5) and that enables the beverage in the strainer (5) to be taken out of the strainer (5) by being filtered.

## Patentansprüche

1. Eine Heißgetränkezubereitungsmaschine (1) umfasst
- einen Körper (2)
- eine Brühkammer (3), worin der Brühvorgang als das Ergebnis der Wechselwirkung zwischen Wasser und dem Rohgetränkematerial durchgeführt wird,
- einen Topf (4), der aufgesetzt auf den Körper (2) unter der Brühkammer (3) verbleibt und in dem sich das aus der Brühkammer (3) auslaufende Getränk ansammelt,
- ein Sieb (5), das in die Brühkammer (3) platziert wird, in das das Rohgetränkematerial eingefügt wird und es ermöglicht, das Getränk durch Zurückhalten der Rohgetränkematerialteilchen in den Topf (4) zu überführen,
- ein Loch (6), das am Boden des Siebs (5) angeordnet ist,
- ein Ventil (7), das auf das Loch (6) aufgesetzt ist und verhindert, dass das Getränk aus dem Sieb (5) nach außen austritt, wenn das Sieb (5) aus der Brühkammer (3) entnommen wird und dass das Getränk im Sieb (5) das Sieb (5) verlassen kann, wenn das Sieb (5) in die Brühkammer (3) gestellt wird,
- ein unteres Gehäuse (8), befindlich an dem Boden des Siebs (5) und sich vom Sieb (5) nach außen erstrecht und somit die Unterseite des Lochs (6) zum Teil verschließt,
- ein oberes Gehäuse (9), befindlich an dem Boden des Siebs (5) und sich dem Sieb (5) hineinragt und somit die Oberseite des Lochs (6) zum Teil verschließt,
und
- das Ventil (7), ist so angeordnet, dass es sich in dem von dem unteren Gehäuse (8) und dem oberen Gehäuse (9) gebildeten Volumen bewegen kann,
wobei ein zusätzliches Loch (10) am Boden des unteren Gehäuses (8) angebracht ist und es ermöglicht, dass das Getränk aus dem Sieb (5) und dem Ventil (7), dass eine Feder (11) und ein Dichtelement (12) aufweist, nach außen befördert werden kann,
- dass in das untere Gehäuse (8) eingelegt ist,
- dass die zusätzliche Öffnung (10) verschließt, indem es durch die Feder (11) gedrückt wird, wenn das Sieb (5) aus der Brühkammer (3) entnommen wird und somit verhindert, dass das Getränk im Sieb (5) nach außen austreten kann,
- dass es durch ein Antriebselement angetrieben wird, dass wenn das Sieb (5) in die Brühkammer (3) eingesetzt wird, dass es in die zusätzliche Öffnung (10) eingesetzt ist und die Feder (11) durch das Berühren des Dichtungselements (12) zusammendrückt,
- und dass das Getränk im Sieb (5) durch die zusätzliche Öffnung (10) aus dem Sieb (5) entnommen werden kann.

2. Ein Heißgetränkezubereitungsmaschine (1), wie in Anspruch 1 aufgeführt, **ist dadurch gekennzeichnet, dass** das untere Gehäuse (8) und / oder das obere Gehäuse (9) durch Schweißen an dem Sieb (5) befestigt sind.

3. Ein Heißgetränkezubereitungsmaschine (1), wie in Anspruch 2 aufgeführt, **ist dadurch gekennzeichnet, dass** das obere Gehäuse (9) durch Punktschweißung an dem Sieb (5) befestigt ist.

4. Ein Heißgetränkezubereitungsmaschine (1), wie in einem der vorherigen Ansprüchen aufgeführt, **ist dadurch gekennzeichnet, dass** das untere Gehäuse (8) an dem Basis des Siebs (5) durch Verschweißung so befestigt ist, dass das im unteren Teil angeordnete Loch (6), die Feder (11) und das Dichtungselement (12) vollständig das Gehäuse (8) umgibt, und dass das obere Gehäuse (9) in dem Sieb (5) durch Schweißen befestigt ist, damit Druck auf die Feder (11) ausgeübt und das Loch (6) teilweise umgeben wird.

5. Ein Heißgetränkezubereitungsmaschine (1), wie in einem der vorherigen Ansprüchen aufgeführt, **ist dadurch gekennzeichnet, dass** das obere Gehäuse (9) eine Plattform (13) und mindestens zwei Flansche (14) besitzt, die sich so über die Plattform (13) nach unten erstrecken, sodass dazwischen ein Abstand erstellt, der jeweils um das Loch (6) herum sitzt und an dieser Stelle durch das Schweißen befestigt ist.

6. Ein Heißgetränkezubereitungsmaschine (1), wie in Anspruch 5 aufgeführt, **ist dadurch gekennzeichnet, dass** zwei Verlängerungen (15) sich von der Plattform (13) nach unten erstrecken und einander zugewandt sind, die zwischen den Flanschen (14) verbleiben und kürzer als die Flansche (14) sind.

7. Ein Heißgetränkezubereitungsmaschine (1), wie in Anspruch 5 oder 6 aufgeführt, **ist dadurch gekennzeichnet, dass** es einen L-Förmigen Flansch (14) aufweist.

8. Ein Heißgetränkezubereitungsmaschine (1), wie in einem der vorherigen Ansprüchen aufgeführt, **ist dadurch gekennzeichnet, dass** eine Führung (16) an dem Endabschnitt das Dichtungselement (12) aufweist, ein Innengehäuse (17), das an der Wand des Lochs (6) befestigt ist, wobei die Führung (16) so angeordnet ist, dass sie die Feder (11) nach oben und unten in das Innengehäuse (17) bewegen, so dass sie der Führung (16) gegenüberliegt.

9. Ein Heißgetränkezubereitungsmaschine (1), wie in einem der vorherigen Ansprüchen aufgeführt, **ist dadurch gekennzeichnet, dass** ein plattenförmiges Sieb (18), worauf Öffnungen befindlich sind, auf den Boden des Siebs (5) montiert ist, damit der Boden, der über dem oberen Gehäuse (9) im Sieb (5) verbleibt, fast vollständig verschließt und es ermöglicht, dass das Herausnehmen des Getränks im Sieb (5) aus dem Sieb (5) durch Filtrieren betrieben werden kann.

## Revendications

1. Une machine de préparation de boissons chaudes (1) comprenant
- un corps (2),
- une chambre de percolation (3) dans laquelle est réalisé le procédé de percolation suite à l'interaction entre l'eau et la matière première pour boisson,
- un pot (4) qui reste sous la chambre de percolation (3) lorsqu'il est placé sur le corps (2) et dans lequel est accumulée la boisson versée de la chambre de percolation (3),
- un filtre (5) qui est placé dans la chambre de percolation (3), dans lequel la matière première pour boisson est mise et qui permet de transférer la boisson dans le pot (4) en retenant les particules de la matière première pour boisson,
- un trou (6) agencé sur la base du filtre (5),
- une soupape (7) qui est placée dans le trou (6), qui empêche une fuite de la boisson dans le filtre (5) vers l'extérieur lorsque le filtre (5) est sorti de la chambre de percolation (3) et qui permet à la boisson dans le filtre (5) de sortir du filtre (5) lorsque le filtre (5) est placé dans la chambre de percolation (3),
- un boîtier inférieur (8) qui est situé à la base du filtre (5), qui s'étend vers l'extérieur du filtre (5) et qui ferme partiellement le côté inférieur du trou (6),
- un boîtier supérieur (9) qui est situé à la base du filtre (5), qui s'étend dans le filtre (5) et qui ferme partiellement le côté supérieur du trou (6), et
- la soupape (7) qui est située de manière à se déplacer dans le volume formé par le boîtier inférieur (8) et le boîtier supérieur (9),
où un trou supplémentaire (10) est disposé à la base du boîtier inférieur (8) et permet de transférer la boisson vers l'extérieur du filtre (5) et de la soupape (7) comportant un ressort (11) et un élément d'étanchéité (12)
- qui est placé dans le boîtier inférieur (8),
- qui ferme le trou supplémentaire (10) en étant poussé par le ressort (11) lorsque le filtre (5) est sorti de la chambre de percolation (3) et empêche la boisson dans le filtre (5) de fuir vers l'extérieur,
- qui est entraîné, lorsque le filtre (5) est placé dans la chambre de percolation (3), par un élément d'entraînement lequel est ajusté dans le trou supplémentaire (10) et compresse le ressort (11) en contactant l'élément d'étanchéité (12),
- et qui permet à la boisson dans le filtre (5) de sortir du filtre (5) à travers le trou supplémentaire (10).

2. Une machine de préparation de boissons chaudes (1) selon la Revendication 1, **caractérisée par** le boîtier inférieur (8) et/ou boîtier supérieur (9) fixé au filtre (5) par soudage.

3. Une machine de préparation de boissons chaudes (1) selon la Revendication 2, **caractérisée par** le boîtier supérieur (9) qui est fixé au filtre (5) par soudure par points.

4. Une machine de préparation de boissons chaudes (1) selon l'une quelconque des revendications précédentes, **caractérisée par** le boîtier inférieur (8) qui est fixé à la base du filtre (5) par soudage de manière à entourer complètement le trou (6), le ressort (11) et l'élément d'étanchéité (12) qui sont placés dans le boîtier inférieur (8), et le boîtier supérieur (9) qui est fixé dans le filtre (5) par soudage de manière à exercer une pression sur le ressort (11) et entoure le trou (6) partiellement.

5. Une machine de préparation de boissons chaudes (1) selon l'une quelconque des revendications précédentes, **caractérisée par** le boîtier supérieur (9) ayant une plate-forme (13) et au moins deux brides (14) qui s'étendent vers le bas depuis le dessus de la plate-forme (13) de manière à ce qu'une distance reste entre celles-ci, chacune étant assise autour du trou (6) et fixée à cet endroit par soudage.

6. Une machine de préparation de boissons chaudes (1) selon la Revendication 5, **caractérisée par** deux extensions (15) qui s'étendent vers le bas depuis le dessus de la plate-forme (13) de manière à se faire face, qui restent entre les brides (14) et qui sont plus courtes que les brides (14).

7. Une machine de préparation de boissons chaudes (1) selon la Revendication 5 ou 6, **caractérisée par** la bride en forme de L (14).

8. Une machine de préparation de boissons chaudes (1) selon l'une quelconque des revendications précédentes, **caractérisée par** un guide (16) qui comporte l'élément d'étanchéité (12) à sa partie d'extrémité, un boîtier interne (17) qui est fixé à la paroi du trou (6) et dans lequel le guide (16) est placé de manière à se déplacer de haut en bas, et le ressort (11) qui est placé dans le boîtier intérieur (17) de manière à être opposé au guide (16).

9. Una machine de préparation de boissons chaudes (1) selon l'une quelconque des revendications précédentes, **caractérisée par** un tamis en forme de plaque (18) muni d'ouvertures, qui est monté sur la base du filtre (5) de manière à fermer presque complètement la base, qui reste au-dessus du boîtier supérieur (9) dans le filtre (5) et qui permet à la boisson dans le filtre (5) de sortir du filtre (5) en étant filtrée.
